# EUROPÄISCHE PATENTSCHRIFT

(11) **EP 0 742 046 B1**
(45) Veröffentlichungstag und Bekanntmachung des Hinweises auf die Patenterteilung: **25.07.2001**
(21) Anmeldenummer: 96106794.9
(22) Anmeldetag: 30.04.1996
(51) Int. Cl.: B01J 31/18, B01J 31/22, C08F 10/00, C07F 17/00

(54) **Organometallverbindungen**
Organometallic compounds
Composé organométallique

(30) Priorität: 08.05.1995 DE 19516801
(43) Veröffentlichungstag der Anmeldung: 13.11.1996
(73) Patentinhaber: HOECHST AKTIENGESELLSCHAFT, 65929 Frankfurt am Main (DE)
(72) Erfinder: Herrmann, Hans-Friedrich, Dr., 64521 Dornheim (DE); Küber, Frank, Dr., 61440 Oberursel (DE); Herrmann, Wolfgang Anton, Prof. Dr., 85354 Freising (DE); Morawietz, Markus, DI, 63457 Hanau (DE)

(56) Entgegenhaltungen:
- EP-A- 0 351 392
- EP-A- 0 528 287
- EP-A- 0 530 647
- EP-A- 0 576 970
- WO-A-94/11410
- WO-A-95/32979
- JOURNAL OF ORGANOMETALLIC CHEMISTRY, Bd. 497, 1995, Seiten C4-C6, XP002029492 W.A.HERRMANN, W.BARATTA, M.J.A. MORAWIETZ: "First amido-functionalized ansa-molybdenocene-type complexes"

## Beschreibung

Die vorliegende Erfindung bezieht sich auf eine Organometallverbindung, die sehr vorteilhaft als Katalysatorkomponente, z.B. für die Herstellung von Polyolefinen oder die Metathese für die ringöffnende Polymerisation (ROMP) eingesetzt werden können. Metallocene und Halbsandwichkomplexe sind nicht nur hinsichtlich der Polymerisation, Oligomerisation oder Metathese von Olefinen von großem Interesse. Sie können auch als Hydrier-, Epoxidations-, Isomerisierungs-, C-C-Kupplungskatalysatoren eingesetzt werden (Chem. Rev. 1992, 92, 965-994).

Organometallverbindungen, die Cr, Mo oder W enthalten, und π-Liganden aufweisen, können als Polymerisationskatalysatoren verwendet werden (WO 94/11410). Die Herstellung solcher Verbindungen erweist sich jedoch als schwierig.

Es bestand die Aufgabe eine neue Organometallverbindung zur Verfügung zu stellen, welche sich zur Olefinpolymerisation eignet. Überraschenderweise wurde gefunden, daß durch Umsetzung eines Metalltetraamids der 6. Nebengruppe des Periodensystems der Elemente (Cr, Mo, W) mit einem Ligandsystem ohne Zusatz einer Base, wie z.B. Butyllithium, direkt eine neue Organometallverbindung erhalten wird.

Die vorliegende Erfindung betrifft somit eine Organometallverbindung der Formel I 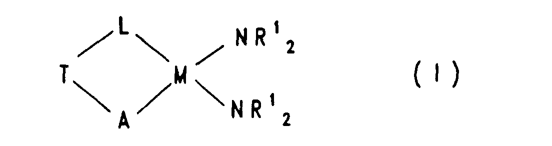 worin M Chrom, Molybdän oder Wolfram ist, L ein *π*-Ligand ist, T eine Verbrückung ist, A ein π-Ligand oder ein anderer Elektronendonor ist und R¹ unabhängig voneinander gleich oder verschieden ein C₁-C₂₀-Kohlenwasserstoffrest oder Wasserstoff sind.

L ist bevorzugt eine substituierte oder unsubstituierte Cyclopentadienylgruppe, T ist bevorzugt [R²₂B]ₙ, worin B Kohlenstoff, Silizium, Germanium oder Zinn ist und die Reste R² gleich oder verschieden sind und Wasserstoff oder einen C₁-C₃₀-Kohlenwasserstoffrest wie C₁-C₁₀-Alkyl oder C₆-C₁₄-Aryl bedeuten, und n gleich 1, 2, 3 oder 4 ist. A ist ein π-Ligand wie eine substituierte oder unsubstituierte Cyclopentadienylgruppe oder ein anderer Elektronendonor wie O, PR³, S oder NR³, worin R³ für Wasserstoff oder einen C₁-C₃₀-Kohlenwasserstoffrest, wie C₁-C₁₀Alkyl oder C₆-C₁₄-Aryl steht.

R¹ sind bevorzugt gleich und bedeuten Wasserstoff oder einen C₁-C₂₀-Kohlenwasserstoffrest wie C₁-C₁₀-Alkyl oder C₆-C₁₆-Aryl.

Beispiele für substituierte Cyclopentadienylgruppen sind:

Tetramethylcyclopentadienyl, Methylcyclopentadienyl, Methyl-tert.-butylcyclopentadienyl, tert.-Butylcyclopentadienyl, Isopropylcyclopentadienyl, Dimethylcyclopentadienyl, Trimethylcyclopentadienyl, Trimethylethylcyclopentadienyl, 5-Phenylcyclopentadienyl, Diphenylcyclopentadienyl, Indenyl, 2-Methylindenyl, 2-Ethylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, Benzoindenyl, 2-Methyl-4,5-benzoindenyl 2-Methyl-α-acenaphthindenyl, 2-Methyl-4,6-diisopropylindenyl, Fluorenyl, 4-Methylfluorenyl oder 2,7-Di-tert.-butylfluorenyl.

Beispiele für bevorzugte Verbrückungen T sind:

Dimethylsilandiyl, Methylphenylsilandiyl, Diphenylsilandiyl, Dimethylgermandiyl, 1,2-Tetramethyldisilandiyl, 1,2-Ethyliden, 1,2-Propyliden, 1,2-Butyliden, 1,3-Propyliden, 1,4-Butyliden.

Beispiele für bevorzugte Strukturelemente A sind:

tert.-Butylamido, Cyclohexylamido, Phenylamido, 2,6-Diisopropylphenylamido, 2,6-Di-tert.-butylphenylamido, Cyclododecylamido, -O, Cyclopentadienyl, Indenyl, Fluorenyl, Cyclopentadienyl, Tetramethylcyclopentadienyl, Methylcyclopentadienyl, Methyl-tert.-butylcyclopentadienyl, tert.-Butylcyclopentadienyl, Isopropylcyclopentadienyl, Dimethylcyclopentadienyl, Trimethylcyclopentadienyl, Trimethylethylcyclopentadienyl, Phenylcyclopentadienyl, Diphenylcyclopentadienyl, Indenyl, 2-Methylindenyl, 2-Ethylindenyl, 3-Methylindenyl, 3-tert.-Butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, Benzoindenyl, 2-Methyl-4,5-benzoindenyl, 2-Methyl-α-acenaphthindenyl, 2-Methyl-4,6-diisopropylindenyl, Fluorenyl, 4-Methylfluorenyl oder 2,7-Di-tert.-butylfluorenyl.

Beispiele für besonders bevorzugte Organometallverbindungen der Formel I sind:
Bis(dimethylamido){[(tert.-butylamido)dimethylsilyl]cyclopentadienyl}molybdän,
Bis(dimethylamido){[(tert.-butylamido)diphenylsilyl]cyclopentadienyl}molybdän,
Bis(dimethylamido){[(tert.-butylamido)ethyliden]cyclopentadienyl}molybdän,
Bis(dimethylamido){[(tert.-butylamido)isopropyliden]cyclopentadienyl}molybdän,
Bis(dimethylamido){[(tert.-butylamido)dimethylsilyl]methylcyclopentadienyl}-molybdän,
Bis(dimethylamido){[(tert.-butylamido)isopropyliden]methylcyclo-pentadienyl}molybdän,
Bis(dimethylamido){[(tert.-butylamido)dimethylsilyl]tert.-butyl-cyclopentadienyl}molybdän,
Bis(dimethylamido){[(tert.-butylamido)diphenylsilyl]tert.-butyl-cyclopentadienyl}molybdän,
Bis(dimethylamido){[(tert.-butylamido)ethyliden]tert.-butyl-cyclopentadienyl}molybdän,
Bis(dimethylamido){[(tert.-butylamido)isopropyliden]tert.-butyl-cyclopentadienyl}molybdän,
Bis(dimethylamido){[(tert.-butylamido)dimethylsilyl]indenyl}molybdän,
Bis(dimethylamido){[(tert.-butylamido)diphenylsilyl]indenyl}molybdän,
Bis(dimethylamido){[(tert.-butylamido)ethyliden]indenyl}molybdän,
Bis(dimethylamido){[(tert.-butylamido)ethyliden]indenyl}molybdän,
Bis(dimethylamido){[(tert.-butylamido)dimethylsilyl]2-methyl-4-phenyl-indenyl}molybdän,
Bis(dimethylamido){[(tert.-butylamido)dimethylsilyl]2-methyl-4,5-benzo-indenyl}molybdän,
Bis(dimethylamido){[(tert.-butylamido)dimethylsilyl]fluorenyl}molybdän,
Bis(dimethylamido){[(tert.-butylamido)ethyliden]fluorenyl}molybdän,
Bis(dimethylamido){[(tert.-butylamido)isopropyliden]fluorenyl}molybdän,
Bis(dimethylamido){[(phenylamido)dimethylsilyl]cyclopentadienyl}molybdän,
Bis(dimethylamido){[(phenylamido)dimethylsilyl]methylcyclopentadienyl}-molybdän,
Bis(dimethylamido){[(phenylamido)dimethylsilyl]tert.-butylcyclopentadienyl}-molybdän,
Bis(dimethylamido){[(phenylamido)diphenylsilyl]indenyl}molybdän,
Bis(dimethylamido){[(cyclohexylamido)dimethylsilyl]cyclopentadienyl}-molybdän,
Bis(dimethylamido){[(cyclohexylamido)isopropyliden]methylcyclopentadienyl}-molybdän,
Bis(dimethylamido){[(cyclohexylamido)dimethylsilyl]tert.-butylcyclopentadienyl}-molybdän,
Bis(dimethylamido){[(cyclohexylamido)isopropyliden]indenyl]molybdän,
Bis(dimethylamido){[(cyclohexylamido)dimethylsilyl]fluorenyl}molybdän,
Bis(dimethylamido)[bis(cyclopentadienyl)isopropyliden]molybdän,
Bis(dimethylamido)[(cyclopentadienyl)(indenyl)isopropyliden]molybdän,
Bis(dimethylamido)[(cyclopentadienyl)(fluorenyl)isopropyliden]molybdän.

Die vorliegende Erfindung betrifft weiterhin ein Verfahren zur Herstellung einer Organometallverbindung der Formel I, wobei eine Verbindung der Formel II, worin L ein π-Ligand, T eine Verbrückung und A ein π-Ligand oder ein anderer Elektronendonor ist, mit einer Verbindung der Formel III umgesetzt wird, worin M Chrom, Molybdän oder Wolfram ist und R¹ unabhängig voneinander gleich oder verschieden ein C₁-C₂₀-Kohlenstoffrest wie C₁-C₁₀-Alkyl oder C₆-C₁₄-Aryl oder Wasserstoff sind.

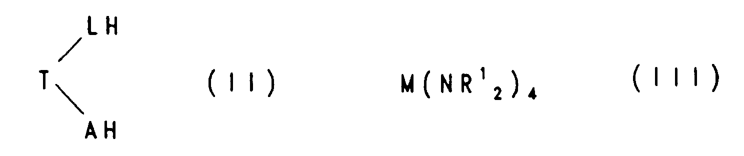

Die Reaktion wird bevorzugt in einem aprotischen Lösemittel, z.B. Ether durchgeführt. Die Temperatur kann zwischen -78 und 140°C betragen, bevorzugt 0 bis 40°C. Die Verbindung der Formel II und die Verbindung der Formel III werden bevorzugt in äquimolaren Mengen eingesetzt. Die Verbindung der Formel III kann auch im Überschuß eingesetzt werden, da nicht abreagiertes Metallamid der Formel III leicht durch Sublimation abgetrennt werden kann.

Die Verfahren zur Herstellung von Verbindungen der allgemeinen Formel II sind bekannt (Chem. Ber. 1990, 123, 1649). Die Verfahren zur Herstellung von Verbindungen der allgemeinen Formel III sind ebenfalls bekannt (J. Chem. Soc. A, (1971), 2741).

Organometallverbindungen der allgemeinen Formel I sind in Kombination mit einem Cokatalysator geeignete Katalysatoren für die Polymerisation von Olefinen zur Herstellung von Olefinpolymeren.

Die vorliegende Erfindung betrifft somit auch ein Verfahren zur Herstellung eines Polyolefins durch Polymerisation mindestens eines Olefins in Gegenwart eines Katalysators, dadurch gekennzeichnet, daß der Katalysator mindestens eine Organometallverbindung der Formel I und mindestens einen Cokatalysator enthält. Die Polymerisation kann eine Homopolymerisation oder eine Copolymerisation sein.

Bevorzugt werden Olefine der Formel R^{a}-CH=CH-R^{b} homo- oder copolymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atome, bedeuten, oder R^{a} und R^{b} zusammen mit den sie verbindenen Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen. Bevorzugt werden in dem erfindungsgemäßen Verfahren Ethylen oder Propylen homopolymerisiert, oder Ethylen mit einem oder mehreren 1-Olefinen mit 3-20 C-Atomen, wie Propylen, und/oder einem oder mehreren Dienen mit 4-20 C-Atomen, wie 1,4-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßen Verfahren eingesetzte Katalysator eine Organometallverbindung der Formel I. Es können auch Mischungen zweier oder mehrerer Organometallverbindungen der Formel I, oder Mischungen von Organometallverbindungen der Formel I mit anderen Metallocenen, Halbsandwichverbindungen oder klassischen Ziegler-Natta-Katalysatoren eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R⁵ₓNH₄₋ₓBR⁶₄, R⁵ₓPH₄₋ₓBR⁶₄, R⁵₃CBR⁶₄ oder BR⁶₃, worin x eine Zahl von 1 bis 4, bevorzugt 3, bedeutet, die Reste R5 gleich oder verschieden, bevorzugt gleich sind, und C₁-C₁₀-Alkyl oder C₆-C₁₈-Aryl sind, oder zwei Reste R⁵ zusammen mit dem sie verbindenden Atomen einen Ring bilden, und die Reste R⁶ gleich oder verschieden, bevorzugt gleich sind, und C₆-C₁₈-Aryl sind, das durch Alkyl, Haloalkyl oder Fluor substituiert sein kann. Insbesondere steht R⁵ für Ethyl, Propyl, Butyl oder Phenyl und R⁶ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel !la für den linearen Typ und/oder der Formel IIb für den cyclischen Typ verwendet, 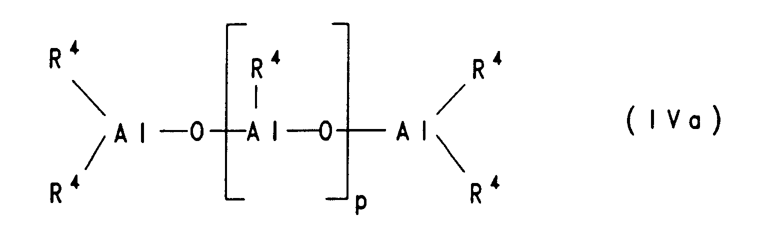 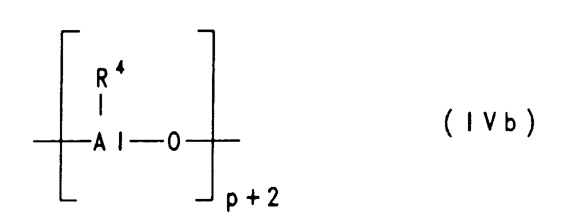 , wobei in den Formeln IVa und IVb die Reste R⁴ gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R⁴ gleich und bedeuten Wasserstoff, Methyl, Isobutyl, Phenyl oder Benzyl, besonders bevorzugt Methyl.

Sind die Reste R⁴ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R⁴) enthalten sind.

Verfahren zur Herstellung der Aluminoxane sind bekannt (DE 4 004 477).

Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die erfindungsgemäße Organometallverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Organometallverbindung wird vorzugsweise in Lösung vorgenommen. Bevorzugt wird dabei die Organometallverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.%, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 70°C.

Dabei wird die Organometallverbindung bevorzugt in einer Konzentration, bezogen auf das Übergangsmetall, von 10⁻³ bis 10⁻⁸, vorzugsweise 10⁻⁴ bis 10⁻ 7 mol Übergangsmetall pro dm3 Lösemittel bzw. pro dm3 Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Organometallverbindung verwendet. Prinzipiell sind aber auch höhere Konzentrationen möglich.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Aktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Organometallverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Organometallverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Organometallverbindung zunächst mit dem Träger und anschließend mit dem Cokatalysator umgesetzt werden. Es kann auch zunächst der Cokatalysator geträgert werden und anschließend mit der Organometallverbindung umgesetzt werden. Auch ist es möglich das Reaktionsprodukt von Organometallverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern (z.B. Rohre) geeignet.

Die nachfolgenden Beispiele sollen die Erfindungen näher erläutern:

Alle Glasgeräte wurden unter Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon von einer Na/K-Legierung abdestilliert.

### 1. Bis(dimethylamido){[(phenylamido)dimethylsilyl]cyclopentadienyl}-molybdän 1:

Mo(N(CH₃)₂)₄ (200 mg, 0.74 mmol) wird in 10 ml Et₂O gelöst und die violette Lösung wird auf -78°C abgekühlt. Dimethyl(cyclopentadienyl)(aminophenyl)silan (158 mg, 0.74 mmol), gelöst in 15 ml Et₂O, wird langsam zugegeben. Die Reaktionsmischung wird langsam auf Raumtemperatur erwärmt und bei dieser Temperatur über Nacht gerührt. Die dunkelrote Lösung wird 2 h auf Rückfluß erhitzt, anschließend filtriert und das Lösungsmittel im Vakuum entfernt. Es wird Pentane (ca. 1 ml) zugegeben und die Lösung bei -78°C umkristallisiert. Es werden 160 mg (60 % Ausbeute) eines braunen Feststoffs isoliert.
¹HNMR (400 MHz, C₆D₆, 25°C, TMS): δ = 0.25(s, 6H; Si(CH₃)₂), 3.20 (s, 12H; N(CH₃)₂), 4.88 (t, 2H, ³J(H,H) =2.1 Hz, C₅H₄), 6.04 (t, 2H, ³J(H,H) = 2.1 Hz, C₅H₄), 6.84 (t, 1H, ³J(H,H) = 7.1 Hz, para-C₆H₅), 7.07 (d, 2H, ³J(H,H) = 8.6 Hz, ortho-C₆H₅), 7.23 (t, 2H, ³J(H,H) = 8.0 Hz, meta-C₆H₅).

### 2. Bis(dimethylamido){[(tert.-butylamido)dimethylsilyl]indenyl}-molybdän 2:

Die Darstellung erfolgt analog Beispiel 1. ¹HNMR (400 Mhz, C₆D₆, 25°C, TMS): δ = 0.28 (s, 6H; Si(CH₃)₂), 1.14 (s, 9H; C(CH₃)₃, 3.26 (s, 12H; N(CH₃)₂, 4.79 (d, 1H, ³J(H,H) = 2.5 Hz, C₉H₆, 6.06 (d, 1H, ³J(H,H) = 2.5 Hz, C₉H₆), 6.87 (t, 1H, ³J(H,H) = 7.0 Hz, C₉H₆), 6.95 (t, 1H, ³J(H,H) = 7.2 Hz, C₉H₆), 7.27 (d, 1H, ³J(H,H) = 7.9 Hz, C₉H₆), 7.65 (d, 1H, ³J(H,H) = 7.9 Hz, C₉H₆).

### 3. Bis(dimethylamido)[(cyclopentadienyl)(fluorenyl)isopropyliden]molybdän 2:

Die Darstellung erfolgt analog Beispiel 1.
¹HNMR (400 Mhz, C₆D₆, 25°C, TMS): δ = 0.58 (s, 6H; C(CH₃)₂), 2.95 (s, 12H; N(CH₃)₃, 5.21 (t, 2H; ³J(H,H) = 2.4 Hz, C₅H₄, 5.59 (t, 2H, ³J(H,H) = 2.4 Hz, C₅H₄), 7.21 (t, 2H, ³J(H,H) = 6.9 Hz, C₁₃H₈), 7.49 (d, 2H, ³J(H,H) = 6.7 Hz, C₁₃H₈), 7.60 (d, 1H, ³J(H,H) = 6.8 Hz, C₁₃H₈), 7.65 (d, 2H, ³J(H,H) = 7.0 Hz, C₁₃H₈); MS(Cl): m/z (%) = 456.3 (100) [M⁺].

## Patentansprüche

1. Organometallverbindung der Formel I 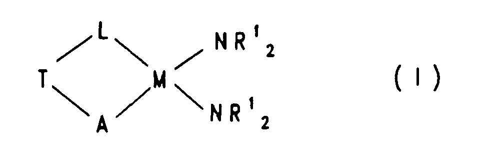 worin M Chrom, Molybdän oder Wolfram ist, L ein π-Ligand ist, T eine Verbrückung ist, A ein π-Ligand oder ein anderer Elektronendonor ist und R¹ unabhängig voneinander gleich oder verschieden ein C₁-C₂₀-Kohlenwasserstoffrest oder Wasserstoff sind.

2. Organometallverbindung gemäß Anspruch 1, worin L eine substituierte oder unsubstituierte Cyclopentadienylgruppe ist.

3. Organometallverbindung gemäß Anspruch 1 oder 2, worin A eine substituierte oder unsubstituierte Cyclopentadienylgruppe ist.

4. Organometallverbindung gemäß einem oder mehreren der Ansprüche 1 bis 3, worin T eine Verbrückung [R²₂B]ₙ ist, worin B Kohlenstoff, Silizium oder Germanium ist und die Reste R² gleich oder verschieden sind und Wasserstoff oder einen C₁-C₃₀-Kohlenwasserstoffrest bedeuten.

5. Katalysatorkomponente, enthaltend mindestens eine Organometallverbindung gemäß einem oder mehreren der Ansprüche 1 bis 4 und mindestens einen Cokatalysator.

6. Katalysatorkomponente gemäß Anspruch 5, zusätzlich einen Träger enthaltend.

7. Verfahren zur Herstellung einer Organometallverbindung der Formel I, 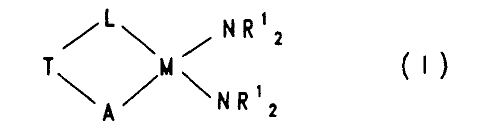 worin M Chrom, Molybdän oder Wolfram ist, L ein π-Ligand ist, T eine Verbrückung ist, A ein π-Ligand oder ein anderer Elektronendonor ist und R¹ unabhängig voneinander gleich oder verschieden ein C₁-C₂₀-Kohlenwasserstoffrest oder Wasserstoff sind, wobei eine Verbindung der Formel II 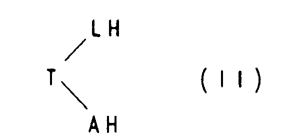 worin L ein π-Ligand, T eine Verbrückung und A ein *π*-Ligand oder ein anderer Elektronendonor ist, mit einer Verbindung der Formel III
M(NR¹₂)₄ (III)
worin M ein vierwertiges Metall ist und R¹ einen C₁-C₂₀-Kohlenwasserstoffrest bedeutet, umgesetzt wird.

8. Verfahren zur Herstellung eines Polyolefins durch Polymerisation mindestens eines Olefins in Gegenwart eines Katalysators, dadurch gekennzeichnet, daß der Katalysator mindestens eine Organometallverbindung der Formel I 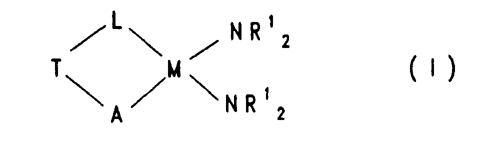 worin M Chrom, Molybdän oder Wolfram ist, L ein π-Ligand ist, T eine Verbrückung ist, A ein π-Ligand oder ein anderer Elektronendonor ist und R¹ unabhängig voneinander gleich oder verschieden ein C₁-C₂₀-Kohlenwasserstoffrest oder Wasserstoff sind, und mindestens einen Cokatalysator enthält.

9. Verwendung einer Organometallverbindung gemäß einem oder mehreren der Ansprüche 1 bis 4 zur Olefinpolymerisation.

## Claims

1. An organometallic compound of the formula I 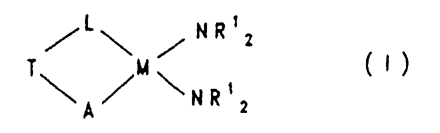 where M is chromium, molybdenum or tungsten, L is a π ligand, T is a bridge, A is a π ligand or another electron donor and R¹ are, independently of one another, identical or different C₁-C₂₀-hydrocarbon radicals or hydrogen.

2. An organometallic compound as claimed in claim 1, where L is a substituted or unsubstituted cyclopentadienyl group.

3. An organometallic compound as claimed in claim 1 or 2, where A is a substituted or unsubstituted cyclopentadienyl group.

4. An organometallic compound as claimed in one or more of claims 1 to 3, where T is a bridge [R²₂B]ₙ, where B is carbon, silicon or germanium and the radicals R² are identical or different and are each hydrogen or a C₁-C₃₀-hydrocarbon radical.

5. A catalyst component comprising at least one organometallic compound as claimed in one or more of claims 1 to 4 and at least one cocatalyst.

6. A catalyst component as claimed in claim 5, additionally containing a support.

7. A process for preparing an organometallic compound of the formula I, 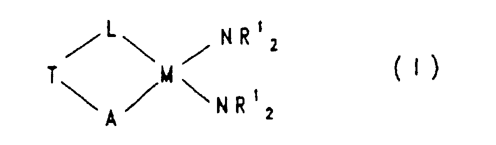 where M is chromium, molybdenum or tungsten, L is a π ligand, T is a bridge, A is a π ligand or another electron donor and R¹ are, independently of one another, identical or different C₁-C₂₀-hydrocarbon radicals or hydrogen, which comprises reacting a compound of the formula II 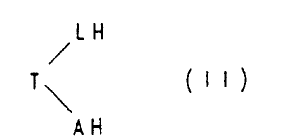 where L is a π ligand, T is a bridge and A is a π ligand or another electron donor, with a compound of the formula III
M(NR¹₂)₄ (III)
where M is a tetravalent metal and R¹ is a C₁-C₂₀-hydrocarbon radical.

8. A process for preparing a polyolefin by polymerization of at least one olefin in the presence of a catalyst, wherein the catalyst comprises at least one organometallic compound of the formula I 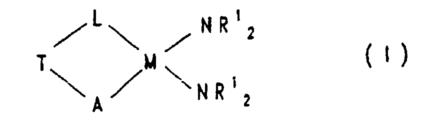 where M is chromium, molybdenum or tungsten, L is a π ligand, T is a bridge, A is a π ligand or another electron donor and R¹ are, independently of one another, identical or different C₁-C₂₀-hydrocarbon radicals or hydrogen, and at least one cocatalyst.

9. The use of an organometallic compound as claimed in one or more of claims 1 to 4 for olefin polymerization.

## Revendications

1. Composé organométallique de formule I 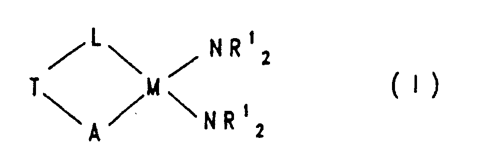 dans laquelle M représente un atome de chrome, de molybdène ou de tungstène, L représente un ligand π, T représente un pont, A représente un ligand π ou un autre donneur d'électrons et R¹, indépendamment l'un de l'autre, identiques ou différents, représentent un résidu hydrocarbure en C₁ à C₂₀ ou un atome d'hydrogène.

2. Composé organométallique selon la revendication 1, dans lequel L est un groupe cyclopentadiène substitué ou non substitué.

3. Composé organométallique selon la revendication 1 ou 2, dans lequel A est un groupe cyclopentadiène substitué ou non substitué.

4. Composé organométallique selon une ou plusieurs des revendications 1 à 3, dans lequel T représente un pont [R²₂B]ₙ, dans lequel B représente un atome de carbone, de silicium ou de germanium et les résidus R² sont identiques ou différents et représentent un atome d'hydrogène ou un résidu hydrocarbure en C₁ à C_{30.}

5. Composant catalytique comprenant au moins un composé organométallique selon une ou plusieurs des revendications 1 à 4 et au moins un cocatalyseur.

6. Composant catalyseur selon la revendication 5, contenant en plus un support.

7. Procédé de fabrication d'un composé organométallique de formule I 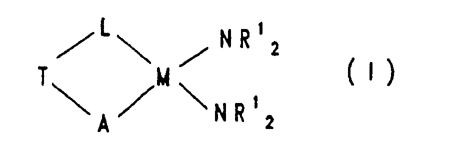 dans laquelle M représente un atome de chrome, de molybdène ou de tungstène, L représente un ligand π, T représente un pont, A représente un ligand π ou un autre donneur d'électrons et R¹, indépendamment l'un de l'autre, identiques ou différents, représentent un résidu hydrocarbure en C₁ à C₂₀ ou un atome d'hydrogène, consistant à faire réagir un composé de formule II 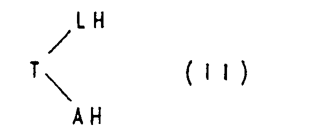 dans laquelle L représente un ligand π, T représente un pont, A représente un ligand π ou un autre donneur d'électrons, avec un composé de formule III
M(NR¹₂)₄ (III)
dans laquelle M représente un atome de métal quadrivalent et R¹ représente un résidu hydrocarbure en C₁ à C_{20.}

8. Procédé de fabrication d'une polyoléfine par polymérisation d'au moins une oléfine en présence d'un catalyseur, caractérisé en ce que le catalyseur contient au moins un composé organométallique de formule I 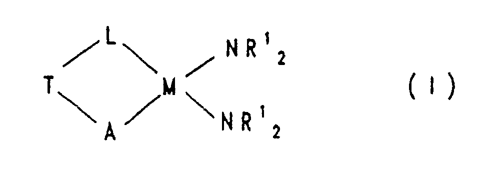 dans laquelle M représente un atome de chrome, de molybdène ou de tungstène, L représente un ligand π, T représente un pont, A représente un ligand π ou un autre donneur d'électrons et R¹, indépendamment l'un de l'autre, identiques ou différents, représentent un résidu hydrocarbure en C₁ à C₂₀ ou un atome d'hydrogène, et au moins un cocatalyseur.

9. Utilisation d'un composé organométallique selon une ou plusieurs des revendications 1 à 4 pour la polymérisation des oléfines.
